# EUROPÄISCHE PATENTSCHRIFT

(11) **EP 1 374 428 B1**
(45) Veröffentlichungstag und Bekanntmachung des Hinweises auf die Patenterteilung: **25.05.2005**
(21) Anmeldenummer: 02726073.6
(22) Anmeldetag: 26.03.2002
(51) Int. Cl.: H04B 1/40, H04B 1/30

(54) **SENDE- UND EMPFANGSEINHEIT**
TRANSCEIVER
UNIT D' MISSION ET DE R CEPTION

(30) Priorität: 26.03.2001 DE 10114779
(43) Veröffentlichungstag der Anmeldung: 02.01.2004
(73) Patentinhaber: Infineon Technologies AG, 81669 München (DE)
(72) Erfinder: MUSCHALLIK, Claus, 82024 Taufkirchen (DE); PFLAUM, Bernd, 82008 Unterhaching (DE); SEDLMAIER, Robert, 85579 Neubiberg (DE)
(74) Vertreter: Epping Hermann & Fischer
(86) Internationale Anmeldenummer: PCT/DE2002/001098
(87) Internationale Veröffentlichungsnummer: WO 2002/078200

(56) Entgegenhaltungen:
- WO-A-99/34625
- US-A- 5 337 005
- US-A- 5 604 927
- US-A- 5 715 530
- US-A- 6 047 178
- US-A- 6 137 999

## Beschreibung

Die vorliegende Erfindung betrifft eine Sende- und Empfangseinheit gemäß dem Oberbegriff des Patentanspruchs 1.

Sende- und Empfangseinheiten, welche insbesondere im Mobilfunk anwendbar sind, werden auch als Transceiver bezeichnet. Derartige Sender-Empfänger umfassen üblicherweise einen Senderpfad, in dem ein Basisbandsignal in ein Hochfrequenz-Signal umgesetzt wird, und einen Empfängerpfad, in dem ein beispielsweise an einer Antenne einkoppelndes Hochfrequenz-Signal in ein Basisbandsignal umgesetzt wird.

Ein derartiger Transceiver ist beispielsweise aus US-A-6,047,178 bekannt. Der dort angegebene Transceiver ist Teil einer Mobilstation und wird für drahtlose mobile Kommunikationsstandards, insbesondere für eine Kommunikation zwischen zwei Mobilstationen eingesetzt. Eine Mobilstation übernimmt mit Hilfe des angegebenen Transceivers die Aufgaben einer Basisstation.

Im Folgenden ist als Basisbandsignal sowohl ein Tiefpaß-Signal verstanden, jedoch auch ein bandbegrenztes Signal um eine geringe Zwischenfrequenz (Low-IF, Low Intermediate Frequency).

Zum Umsetzen des Hochfrequenz-Signals in das Basisbandsignal sind im Empfängerpfad verschiedene Verfahren und dadurch bedingte Empfangsarchitekturen bekannt. Beispielsweise bei der direkten Umsetzung, Direct Conversion, DC, wird das Hochfrequenz-Signal mittels eines Oszillatorsignals in ein komplexes, in eine I- und eine Q-Komponente zerlegtes Signal heruntergemischt.

Die I-Komponente ist dabei die Inphase- und die Q-Komponente die hierzu um 90 Grad phasenverschobene Quadraturkomponente des komplexen Basisbandsignals.

Eine weitere Möglichkeit des Umsetzens des Hochfrequenz-Signals in ein Basisbandsignal im Empfänger ist das sogenannte Low-IF, bei dem der lokale Oszillator im Empfänger nicht mit der Trägerfrequenz des Hochfrequenz-Signals, sondern mit einer um eine Zwischenfrequenz verschobenen Frequenz schwingt. Bei dieser Frequenzsynthese entsteht ein Spiegelband, welches mit dem Nutzbereich zusammenfallen würde und demnach zu unterdrücken ist. Das entstehende Basisbandsignal ist rein reell.

Eine dritte, bekannte Möglichkeit der Frequenzsynthese im Empfangszweig ist unter dem Namen spiegelunterdrückende Mischung, Image Rejection, IR, bekannt. Dabei schwingt der Empfangsoszillator wie bei der Low-IF-Frequenzsynthese auf einer um die Zwischenfrequenz vom Träger abweichenden Lokaloszillatorfrequenz. Das erhaltene Basisbandsignal besteht aus einer I- und einer Q-Komponente, es wird jedoch eine zusätzliche Phasendrehung der Q-Komponente und eine anschließende Summation der I- und Q-Signale durchgeführt.

Im Senderzweig, bei dem das Basisbandsignal in ein Hochfrequenzsignal umgesetzt wird, sind ebenfalls die drei beschriebenen Verfahren, nämlich spiegelunterdrückende Mischung, Direktumsetzung und Low-IF-Umsetzung in analoger Weise möglich.

In Abhängigkeit von der gestellten Aufgabe, beispielsweise dem erforderlichen Modulationsverfahren, dem gewünschten Vielfachzugriffsverfahren, einem erforderlichen Duplexabstand, sowie den erforderlichen einzuhaltenden Spezifikationen bezüglich Rauschen, Genauigkeit der Kanaleinstellung et cetera ist es üblich, eines der genannten Verfahren in eine Sende- und Empfangsarchitektur zu implementieren und dessen Eigenschaften an die gestellte Aufgabe anzupassen.

Aufgabe der vorliegenden Erfindung ist es, eine Sende- und Empfangseinheit anzugeben, welche für eine Vielzahl unterschiedlicher Übertragungsarten geeignet und damit universell einsetzbar und zudem kostengünstig herstellbar ist.

Erfindungsgemäß wird die Aufgabe gelöst mit einer Sende- und Empfangseinheit, aufweisend
- einen Empfangszweig mit einer Inphase- und einer Quadraturkomponente und mit einem ersten Frequenzumsetzer,
- einen Sendezweig mit einer Inphase- und einer Quadraturkomponente und mit einem zweiten Frequenzumsetzer, bei der
- der erste Frequenzumsetzer mit einem ersten Frequenzgenerator gekoppelt ist,
- der zweite Frequenzumsetzer über einen ersten Schalter umschaltbar mit dem ersten oder einem zweiten Frequenzgenerator gekoppelt ist, und
- eine Steuereinrichtung vorgesehen ist, die mit dem ersten Schalter zum Auswählen einer Sende- und Empfangsbetriebsart gekoppelt ist.

Die Sende- und Empfangseinheit weist für Empfangszweig und für Sendezweig jeweils einen eigenen und getrennt voneinander arbeitenden Frequenzgenerator auf, wobei die beiden Frequenzgeneratoren jedoch eine gemeinsame Bezugsfrequenzquelle haben können.

Hierdurch sind die Lokaloszillator-Frequenzen der Frequenzgeneratoren getrennt voneinander einstellbar. Dies wiederum ermöglicht sende- und empfangsseitig den Einsatz unterschiedlicher Frequenzsyntheseverfahren. Beispielsweise kann sendeseitig eine Direktumsetzung und empfangsseitig eine spiegelunterdrückende Mischung oder eine Low-IF-Mischung zum Einsatz kommen. Auch alle anderen denkbaren Kombinationen der eingangs beschriebenen Frequenz-Syntheseverfahren sind mit der beschriebenen Sende- und Empfangseinheit möglich. Weiterhin ist hierdurch ein Abgleich von I/Q-Impairments in Sender und Empfänger möglich.

Je nach Schalterstellung des ersten Schalters können, bei gleicher Sende- und Empfangsbetriebsart, beispielsweise zum Erzielen geringerer Stromaufnahme, Sende- und Empfangs-Frequenzumsetzer mit einem gemeinsamen Frequenzgenerator angesteuert sein.

Empfangsseitig wird ein an einem Hochfrequenzeingang der Sende- und Empfangseinheit einkoppelndes Hochfrequenzsignal in ein komplexes oder reelles Tiefpaß- oder Bandpaß-Basisbandsignal mittels des ersten Frequenzumsetzers heruntergemischt, der von einer vom ersten Frequenzgenerator bereitgestellten Trägerfrequenz angesteuert wird. Sendeseitig wird mit beschriebenem Transceiver ein komplexes oder reelles Tiefpaß- oder Bandpaß-Basisbandsignal in einer ersten Schalterstellung des ersten Schalters mit der vom zweiten Frequenzgenerator bereitgestellten Trägerfrequenz in dem zweiten Frequenzumsetzer in ein Hochfrequenzsignal umgewandelt. Erster und zweiter Frequenzgenerator können dabei, wie bereits erwähnt, eine unterschiedliche Trägerfrequenz bereitstellen.

Der erste Schalter ist bevorzugt so ausgeführt, daß in einer ersten Schalterstellung der erste Frequenzgenerator mit dem ersten Frequenzumsetzer und der zweite Frequenzgenerator mit dem zweiten Frequenzumsetzer gekoppelt ist, während in der zweiten Schalterstellung der erste Frequenzgenerator mit dem ersten und dem zweiten Frequenzumsetzer gekoppelt ist. Der erste Frequenzgenerator ist dabei bevorzugt fest mit dem ersten Frequenzumsetzer gekoppelt.

Da Sende- und Empfangsfrequenzsynthese jeweils eine IQ-Modulation beziehungsweise IQ-Demodulation vorsehen, sind erster und zweiter Frequenzumsetzer bevorzugt als IQ-Mischer ausgeführt. Der empfangsseitige, erste Frequenzumsetzer umfaßt dabei einen im I-Zweig vorgesehenen 1-Mischer, dem das vom ersten Frequenzumsetzer bereitgestellte Lokaloszillatorsignal unverändert, und einen Q-Mischer, dem das vom ersten Frequenzgenerator bereitgestellte Trägersignal mit einer Phasendrehung von 90° zugeführt wird.

Entsprechend umfaßt der Sendezweig bevorzugt ebenfalls einen IQ-Mischer, mit einem 1-Mischer, der ein eingangsseitig bereitgestelltes Inphase-Signal mit einer unverändert von, abhängig von der Schalterstellung, erstem oder zweitem Frequenzgenerator bereitgestellten Signal mischt und einen Q-Mischer, der ein abhängig von der Schalterstellung vom ersten oder zweiten Frequenzgenerator bereitgestelltes und um 90° phasenverschobenes Signal mit der Q-Komponente eines von einer digitalen Signalverarbeitungseinrichtung bereitgestellten Signals mischt. Ausgangsseitig sind I- und Q-Mischer des zweiten Frequenzumsetzers mit einem Addierer verbunden und mit einem Hochfrequenzausgang der Schaltung gekoppelt. Umgekehrt sind die Signaleingänge der I- und Q-Mischer des ersten Frequenzumsetzers miteinander und mit einem Hochfrequenz-Eingang der Sende- und Empfangseinheit gekoppelt.

Das beschriebene universelle Transceiversystem ist für Funkstandards mit oder ohne Duplexabstand, das heißt Abstand der Trägerfrequenzen von Sende- und Empfangssignal voneinander, geeignet.

Die Steuereinrichtung ist bevorzugt so mit erstem und zweitem Frequenzgenerator gekoppelt, daß zum Bereitstellen einer direkten Frequenzumsetzung am ersten beziehungsweise zweiten Frequenzumsetzer jeweils die Trägerfrequenz des empfangenen beziehungsweise zu sendenden Hochfrequenzsignals bereitsteht und daß zum Empfangen beziehungsweise Senden in einer Low-IF-Frequenzsynthese oder in einem spiegelunterdrückenden Verfahren jeweils eine von der Trägerfrequenz des Hochfrequenzsignals um die Zwischenfrequenz abweichendes, nach oben oder nach unten abweichendes Lokaloszillatorsignal am ersten beziehungsweise zweiten Frequenzumsetzer bereitgestellt ist. Wie bereits erläutert, können mit beschriebener Anordnung im Sende- und Empfangszweig verschiedene Frequenzsyntheseverfahren zum Einsatz kommen und damit auch verschiedene Lokaloszillatorfrequenzen eingangsseitig an den Frequenzumsetzern bereitgestellt sein.

In einer bevorzugten Ausführungsform der vorliegenden Erfindung ist zur Kopplung von Sende- und Empfangszweig ein zweiter Schalter vorgesehen zum schalterstellungsabhängigen Durchschalten eines vom Sendezweig bereitgestellten Hochfrequenz-Signals auf einem Hochfrequenzeingang des Empfangszweiges.

Sendeseitig ist der zweite Schalter fest mit dem Ausgang des zweiten Frequenzumsetzers, beispielsweise dem Summierknoten, verbunden. Empfangsseitig ist, abhängig von der Schalterstellung, der zweite Schalter mit dem Signaleingang des ersten Frequenzumsetzers verbunden. Weiterhin ist der zweite Schalter hochfrequenzseitig, je nach Schalterstellung, beispielsweise über ein Filter, an einem in einer Senderichtung betreibbaren Funkschnittstellenpfad angeschlossen. Ein weiterer Funkschnittstellenpfad ist bevorzugt über ein weiteres Bandpaßfilter fest mit dem HF-Signaleingang des Empfangspfades, nämlich mit dem Signaleingang des ersten Frequenzumsetzers verbunden. Der weitere Funkschnittstellenpfad kann bei getrenntem Senden und Empfangen lediglich als Empfangspfad, und bei Senden und Empfangen auf einem gemeinsamen Funkschnittstellenpfad für beide Übertragungsrichtungen ausgebildet sein.

In einer ersten Schalterstellung des zweiten Schalters erfolgen demnach Senden und Empfangen in vollständig voneinander getrennten Signalpfaden zur Bereitstellung eines echten Vollduplex-Betriebes des Transceivers. In der zweiten Schalterstellung hingegen sind hochfrequenzseitig Sende- und Empfangspfad miteinander zur Bildung eines gemeinsamen Hochfrequenz-Signalpfades, bevorzugt mit gemeinsamem Bandpaßfilter, in Sende- und Empfangsrichtung verbunden. Mit dem zweiten, hochfrequenzseitig vorgesehenen Schalter ergibt sich eine weitere vorteilhafte Wirkung des beschriebenen Transceivers dadurch, daß in einfacher Weise ein IQ-Abgleichmodus ausführbar ist, welcher vor einem Senden oder Empfangen einen Abgleich sogenannter IQ-Impairments ermöglicht, was insbesondere bei höheren Modulationsverfahren, wie 64-QAM (Quadratur-Amplituden-Modulation) und Mehrträgerverfahren, wie OFDM (Orthogonally Frequency Division Multiplexing) von großer Bedeutung ist.

Der zweite Schalter ist zu seiner Ansteuerung mit der Steuereinrichtung gekoppelt.

In einer weiteren, bevorzugten Ausführungsform der vorliegenden Erfindung ist im Sende- und Empfangszweig hochfrequenzseitig je ein Bandpaß-Filter vorgesehen. Das im Sendezweig zwischen zweitem Schalter und Funkschnittstelle vorgesehene erste Bandpaß-Filter ist bevorzugt mit einer Mittenfrequenz und mit einer Bandbreite ausgeführt, welche auf Nur-Senden hin optimiert sind.

Das im Empfangs- beziehungsweise Sende- und Empfangszweig vorgesehene zweite Bandpaß-Filter, welches zwischen dem zweiten Schalter und der Funkschnittstelle vorgesehen ist, weist bevorzugt eine Mittenfrequenz und eine Bandbreite auf, welche für Empfangen und Senden optimiert sind.

Die beiden Bandpaß-Filter können, je nach Anwendung, gleiche oder verschiedene Filtercharakteristiken haben.

In einer weiteren, bevorzugten Ausführungsform der vorliegenden Erfindung sind die Bandpaß-Filter Oberflächenwellenfilter, englisch Surface Acoustic Wave, SAW.

In einer weiteren, bevorzugten Ausführungsform der vorliegenden Erfindung ist im Sende- und Empfangszweig jeweils zumindest ein Tiefpaß-Filter mit jeweils umschaltbarer Grenzfrequenz zwischengeschaltet, welches zu seiner Ansteuerung mit der Steuereinrichtung verbunden ist.

Da Sende- und Empfangszweig als komplexe IQ-Pfade mit jeweils einem I-Zweig und einem Q-Zweig ausgeführt sind, kann entsprechend jeweils ein Tiefpaß-Filter für jeden Zweig vorgesehen sein, so daß insgesamt je ein Anti-Alias-Filter im I-Zweig und ein Anti-Alias-Filter im Q-Zweig, jeweils sendeund empfangsseitig, vorgesehen sind.

Bevorzugt sind die Tiefpaß-Filter umschaltbar zwischen einer ersten Grenzfrequenz, die der halben Bandbreite des Nutzsignals, erhöht um einen Sicherheitsfaktor, entspricht und einer zweiten Grenzfrequenz, die der halben Bandbreite plus der Zwischenfrequenz, ebenfalls erhöht um einen Sicherheitsfaktor, entspricht. Die beschriebene Umschaltung ermöglicht ein wirksames Bereitstellen einer Anti-Aliasing-Filterung, je nach Frequenzsyntheseverfahren. Während für Direktumsetzung die geringe Grenzfrequenz einzustellen ist, ist für Low-IF-Umsetzung die um die Zwischenfrequenz erhöhte, höhere Grenzfrequenz einzustellen. Werden sende- und empfangsseitig unterschiedliche Frequenzsyntheseverfahren eingesetzt, so sind selbstverständlich sende- und empfangsseitig verschiedene Tiefpaß-Filter-Grenzfrequenzen durch die Steuereinrichtung auszuwählen.

In einer weiteren, bevorzugten Ausführungsform der vorliegenden Erfindung ist dem Sendezweig vor- und dem Empfangszweig nachgeschaltet eine digitale Signalverarbeitungseinrichtung vorgesehen, welche sende- und empfangsseitig je ein Tiefpaß-Filter mit umschaltbaren Filterkoeffizienten umfaßt.

Analog- und Digitaleinheit können entweder in zwei getrennten integrierten Schaltkreisen oder in einem gemeinsamen Schaltkreis integriert sein.

Sendeseitig ist die digitale Signalverarbeitungseinrichtung bevorzugt den Anti-Aliasing-Tiefpaßfiltern vorgeschaltet, welche wiederum dem zweiten Frequenzumsetzer vorgeschaltet sind. Empfangsseitig hingegen ist die digitale Signalverarbeitungseinrichtung bevorzugt den Anti-Aliasing-Filtern nachgeschaltet, welche wiederum bevorzugt dem ersten Frequenzumsetzer nachgeschaltet sind.

In der digitalen Signalverarbeitungseinrichtung ist mit den Tiefpaß-Filtern mit umschaltbaren Filterkoeffizienten, welche bevorzugt Filter höherer Ordnung sind, eine Korrektur von beschriebenen IQ-Impairments möglich. Zur Kopplung des bereits beschriebenen, üblicherweise analog ausgeführten Hochfrequenz-Frontends des beschriebenen Transceivers mit der digitalen Signalverarbeitungseinrichtung ist bevorzugt ein Analog/Digital- beziehungsweise Digital/Analog-Konverter vorgesehen. Empfangsseitig und sendeseitig angeschlossene digitale Signalverarbeitungseinrichtungen können als eine gemeinsame oder als zwei getrennte digitale Signalprozessoren ausgebildet sein.

In einer weiteren, bevorzugten Ausführungsform der vorliegenden Erfindung umfaßt die digitale Signalverarbeitungseinrichtung je ein Phasenfehler-Kompensationsnetzwerk.

Das Phasenfehler-Kompensationsnetzwerk dient zum Wiederherstellen einer exakten, 90° betragenden Phasenverschiebung zwischen I- und Q-Pfad sowohl sende- als auch empfangsseitig.

In einer weiteren, bevorzugten Ausführungsform der vorliegenden Erfindung ist die Steuereinrichtung mit den Phasenfehler-Kompensationsnetzwerken und den Tiefpaß-Filtern der digitalen Signalverarbeitungseinrichtung zu deren Ansteuerung verbunden. Alternativ hierzu kann zur Ansteuerung der Phasenfehler-Kompensationsnetzwerke und der Tiefpaß-Filter der digitalen Signalverarbeitungseinrichtung auch eine weitere Steuereinrichtung vorgesehen sein, die mit der ersten Steuereinrichtung gekoppelt sein kann.

In einer weiteren, bevorzugten Ausführungsform der vorliegenden Erfindung sind erster und zweiter Frequenzgenerator an eine gemeinsame Bezugsfrequenzquelle, beispielsweise eine Quarzreferenzquelle, angeschlossen.

Hierdurch ist ein besonders flächen- und stromsparender Aufbau des beschriebenen Transceivers möglich.

In einer weiteren, bevorzugten Ausführungsform der vorliegenden Anordnung sind erster und zweiter Frequenzgenerator jeweils als Phasenregelschleife ausgebildet, mit durch Teilerverhältnisse unabhängig voneinander einstellbarer Lokaloszillator-Frequenz.

Die digitalen Signalverarbeitungseinrichtungen können sendeund/oder empfangsseitig Mittel zur Spiegelfrequenzunterdrükkung aufweisen, die zu Ihrer Aktivierung mit der Ansteuereinrichtung gekoppelt sein können.

Die Sende- und Empfangseinheit mit Sende- und Empfangszweig kann zur Kompensation von I/Q- und DC-Offset-Fehlern mit einem OFDM- oder sonstigem Demodulator angesteuert sein.

Weitere Einzelheiten der Erfindung sind Gegenstand der Unteransprüche.

Die Erfindung wird nachfolgend an einem Ausführungsbeispiel anhand mehrerer Zeichnungen näher erläutert.

Es zeigen:
- Figur 1: ein Blockschaltbild eines ersten Ausführungsbeispiels der vorliegenden Erfindung,
- Figur 2: eine sendeseitig dem Blockschaltbild von Figur 1 vorgeschaltete digitale Signalverarbeitungseinrichtung,
- Figur 3: eine empfängerseitig dem Blockschaltbild von Figur nachgeschaltete digitale Signalverarbeitungseinrichtung,
- Figur 4: die Frequenzverhältnisse bei einem Empfänger mit Direktumsetzung,
- Figur 5: die Frequenzverhältnisse bei einem Empfänger mit Low-IF-Frequenzsynthese, mit lediglicher Verwendung der InphaseKomponente,
- Figur 6: die Frequenzverhältnisse bei einem Empfänger mit spiegelunterdrückender Mischung,
- Figur 7: die Frequenzverhältnisse bei einem Sender mit niedriger Zwischenfrequenz, und ausschließlicher Weiterverarbeitung der I-Komponente,
- Figur 8: die Frequenzverhältnisse an einem Sender mit frequenzunterdrückender Mischung,
- Figuren 9a - 9c: die Abschätzung von Sende- und Empfangs-I/Q-Impairmentfehlern und deren Korrekturmöglichkeit mit der Schaltung gemäß Figur 1,
- Figuren 10a - 10d: Schaubilder zur weiteren Erläuterung der IQ-Impairment-Korrektur,
- Figuren 11a - 11c: die Korrektur der IQ-Impairments nach deren Abschätzung im Sendezweig,
- Figuren 12a - 12c: die Möglichkeit der Korrektur von unerwünschten Signalanteilen, welche durch IQ-Impairments verursacht sind, an einem ersten Modulationsbeispiel,
- Figuren 13a - 13c: die IQ-Impairment-Korrektur an einem weiteren Modulationsbeispiel
- Figur 14: die Anordnung von Trägern und Nullen für die IQ-Impairment-Kompensation an einem Schaubild,
- Figuren 15a - 15c: die Korrekturmöglichkeiten von DC-Offsets,
- Figur 16: eine Weiterbildung des Gegenstands gemäß Figuren 1 bis 3 ausgelegt zur Korrektur von DC-Offsets gemäß dem Prinzip beschrieben in Figuren 15a bis 15c,
- Figuren 17a, b: die Korrektur von DC-Offsets mittels OFDM-Testsignalen,
- Figuren 18a - 18c: Schaubilder zur Erläuterung der getrennten Erfaßbarkeit von Sende- und Emfängerseitig auftretenden IQ-Impairments sowie DC-Offsets mit vorliegendem Gegenstand durch geeignete OFDM-Testsignale und
- Figur 19: ein Ausfürungsbeispiel des Schalters 5 von Figur 1.

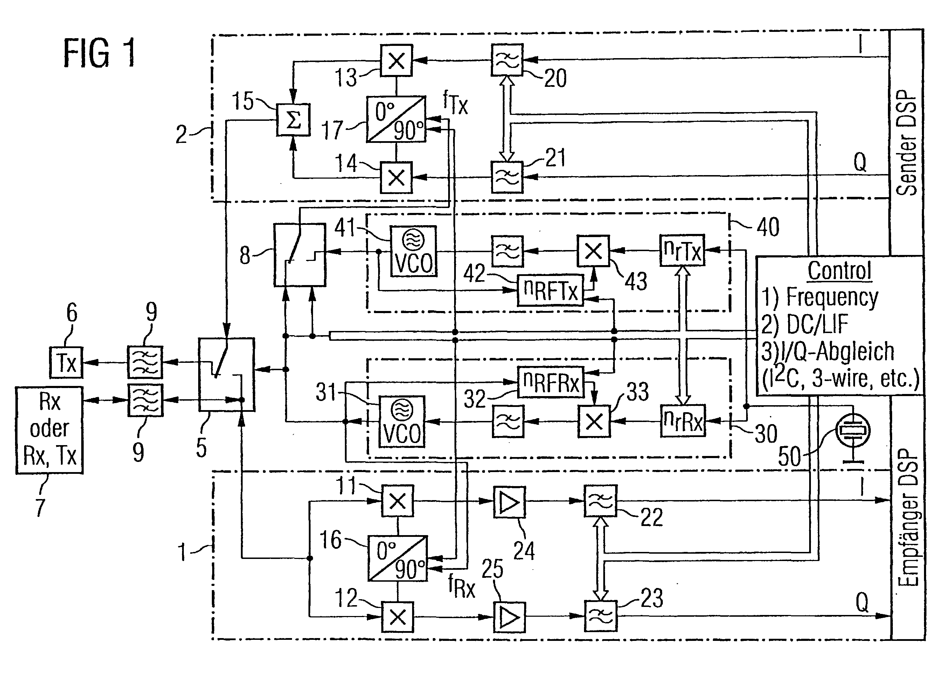

Figur 1 zeigt ein Blockschaltbild einer Sende- und Empfangseinheit mit einem Empfangszweig 1 und einem Sendezweig 2.

Sende- und Empfangszweig 2, 1 verbinden jeweils eine digitale Signalverarbeitungseinrichtung 3, 4 mit einem Schalter 5. Der Schalter 5 ist über HF-Sende- und Empfangspfade (9) mit einer Luftschnittstelle 6, 7 gekoppelt.

Der Empfangszweig 1 weist einen ersten Frequenzumsetzer 11, 12 auf, der zwei mit um 90° phasenverschobenen Signalen angesteuerte Mischer 11, 12 umfaßt, welche ein über Schalter 5 einkoppelndes Hochfrequenz-Signal auf ein komplexes Basisbandsignal heruntermischen. Ausgangsseitig an den ersten Frequenzumsetzern 11, 12 ist dabei demnach je ein I- und Q-Pfad für eine Inphase- und eine Quadraturkomponente des Basisbandsignals gebildet.

Der Sendezweig 2 umfaßt einen zweiten Frequenzumsetzer 13, 14, der ein an durch zwei um 90° phasenverschobene Lokaloszillatorsignale angesteuerten Mischern am Eingang bereitgestelltes IQ-Signal eines Basisbandes zu einem Hochfrequenzsignal heraufmischt, wobei die Signalausgänge der Mischer 13, 14 des zweiten Frequenzumsetzers miteinander in einem Addierknoten 15 verbunden sind, der ausgangsseitig mit dem Schalter 5 gekoppelt ist. Die Aufwärtsmischer 13, 14 weisen dabei an ihren Eingängen einen Inphase-Pfad I beziehungsweise einen Quadratur-Pfad Q auf.

Zur Bereitstellung von Lokaloszillator- beziehungsweise Trägerfrequenzen zur Ansteuerung des ersten und zweiten Frequenz-Umsetzers 11 bis 14 sind zwei unabhängig voneinander arbeitende Frequenzgeneratoren 30, 40 vorgesehen. Diese sind jeweils als Phasenregelschleifen ausgebildet. Im einzelnen umfassen die Phasenregelschleifen 30, 40 jeweils einen spannungsgesteuerten Oszillator 31, 41, dessen Ausgangssignal in einem nachgeschalteten Frequenzteiler 32, 42 frequenzmäßig heruntergeteilt und anschließend einem dem Frequenzteiler 32, 42 nachgeschalteten Phasendetektor 33, 43 zugeführt wird. Dieser vergleicht das frequenzgeteilte Ausgangssignal des VCO 41, 31 mit einem von einer gemeinsamen Bezugsfrequenzquelle 50 bereitgestellten und ebenfalls in Frequenzteilern 34, 44 heruntergeteilten Referenzsignals. Den Phasendetektoren 33, 43 ist zur Gewährleistung der Stabilität des Regelkreises je ein Schleifenfilter 35, 45 nachgeschaltet, welches ausgangsseitig jeweils mit dem Abstimmeingang der VCO 31, 41 verbunden ist. Während der Ausgang der ersten PLL 30 unmittelbar über einen Phasenverschiebungsbaustein 16 mit den Mischer-Eingängen 11, 12 verbunden ist, und zusätzlich einem umschaltbaren Eingang des Schalters 8 zuführbar ist, mit dem das Ausgangssignal der PLL 30 über einen an einen Ausgang des Schalters 8 angeschlossenen, weiteren Phasenverschiebungsbaustein 17 den Lokaloszillator-Eingängen der Mischer 13, 14 zuführbar ist, ist der Ausgang der zweiten PLL 40 an einen weiteren, umschaltbaren Eingang des Schalters 8 angeschlossen, über den die zweite PLL 40 umschaltbar mit dem Phasenverschiebungsbaustein 17 an dessen Eingang verbunden ist. Die Phasenverschiebungsbausteine 16, 17 sind zur Bereitstellung einer Phasenkompensation im analogen Schaltungsteil mit der Steuereinrichtung 26 verbunden.

In einer ersten Schalterstellung des Schalters 8 ist der Ausgang der ersten PLL 30 mit dem Frequenzumsetzer 11, 12 und zugleich mit dem Frequenzumsetzer 13, 14 zur Bereitstellung einer Trägerfrequenz verbunden. In einer zweiten Schalterstellung hingegen ist der Ausgang der ersten PLL 30 mit dem ersten Frequenzumsetzer 11, 12, und der Ausgang der zweiten PLL 40 mit dem sendeseitigen Frequenzumsetzer 13, 14 verbunden.

Der zweite Schalter 5 ist so ausgebildet und angeschlossen, daß in einer ersten Schalterstellung, bei der Sende- und Empfangszweige vollständig voneinander getrennt geführt sind, der Ausgang des Sendezweiges 2 über ein SAW-Filter 9 mit einer ersten Luftschnittstelle 6 gekoppelt ist, und der Eingang des Empfangszweiges 1, ebenfalls über ein Oberflächenwellen-Filter 9 mit einer zweiten Luftschnittstelle 7 verbunden ist. Dabei liegt eine vollständige Trennung der sende- und empfangsseitigen Signalpfade vor. In einer zweiten Schalterstellung des Schalters 5 hingegen sind Ausgang des Sendezweiges 2 und Eingang des Empfangszweiges 1 unmittelbar miteinander und mit der zweiten Luftschnittstelle 7 über das Oberflächenwellenfilter 9 verbunden.

Die dem sendeseitigen Frequenzumsetzer 13, 14 vorgeschalteten, als Antialiasing-Filter wirkenden Tiefpaß-Filter 20, 21 sowie die ebenfalls in I- und Q-Zweig des Empfängers vorgesehenen und dem Frequenzumsetzer des Empfängers 11, 12 über Verstärker nachgeschalteten Antialiasing-Tiefpaß-Filter 22, 23 weisen je eine umschaltbare Grenzfrequenz auf. Die empfangsseitigen Tiefpaß-Filter 22, 23 sind dabei über rauscharme Verstärker 24, 25 an die Signalausgänge der Abwärtsmischer 11, 12 angeschlossen. Je nach eingesetztem Frequenzsyntheseverfahren, wie Direct Conversion, Low-IF oder spiegelfrequenzunterdrückender Mischung kann zwischen zumindest zwei Grenzfrequenzen umgeschaltet werden. Der durch die Grenzfrequenz bestimmte Durchlaßbereich der Tiefpaß-Filter 20 bis 23 ist dabei umschaltbar zwischen einem ersten Bereich, der zumindest gleich der halben Bandbreite des Nutzsignals ist, und einem zweiten Durchlaßbereich, der zumindest der Summe aus halber Bandbreite und der Low-IF-Zwischenfrequenz entspricht.

Zur Ansteuerung der Antialiasing-Filter 20 bis 23 sowie der Umschaltung der Schalter 5, 8 und schließlich zur Vorgabe der Kanäle beziehungsweise Trägerfrequenzen der PLLs 30, 40 durch Einstellen von Teilerverhältnissen ist eine Steuereinrichtung 26 mit jeweiligen Steuereingängen der genannten Bauteile verbunden.

### Für die einzustellenden Kanäle gilt:

Bei direkter Umsetzung im Sender beziehungsweise Empfänger gilt für die Lokaloszillatorfrequenz, daß diese gleich der Mittenfrequenz des Hochfrequenz-Signals ist. Das erhaltene Basisbandsignal besteht aus einer I- und einer Q-Komponente, ist ein komplexes Signal und kann daher unsymmetrisch bezüglich der Null-Hertz-Achse sein. Das nützliche Basisbandsignal hat die physikalische Bandbreite BW/2, die Nachbarkanäle fallen außerhalb des Nutzbereiches. Der Nutzbereich liegt dabei zwischen 0 Hertz und BW/2, die Nachbarkanäle größer BW/2. Das Antialiasing-Filter 20 bis 23 ist ein Tiefpaß-Filter der Eckfrequenz BW/2 und filtert zugleich Nachbarkanäle aus dem Basisbandsignal, unter der Voraussetzung, daß die IQ-Demodulation ideal erfolgt und keine IQ-Impairments aufweist. In diesem Fall kann die Demodulation des Basisbandsignals nach einer in Figur 1 nicht dargestellten Analog/Digital-Wandlung mit einer digitalen Signalverarbeitung 4, 3 problemlos erfolgen.

Sendeseitig liegt das Basisbandsignal bei der Direktumsetzung als Tiefpaßsignal in I- und Q-Komponente vor, jeweils mit der Bandbreite BW/2. Die Frequenzsynthese des Sendezweiges wird so eingestellt, daß der Sendeoszillator 40 beziehungsweise 30 auf der Mittenfrequenz des zu sendenden Signals schwingt. Nach der IQ-Modulation erhält man ein Hochfrequenz-Signal der Mittenfrequenz, die gleich der Trägerfrequenz ist. Unter der Voraussetzung, daß die IQ-Modulation ideal erfolgt und keine IQ-Impairments aufweist, erfolgt keine Degradation des Signals. Eine nicht-ideale IQ-Modulation bringt hingegen ein unerwünschtes Übersprechen der I- in die Q-Komponente mit sich und ist, wie später erläutert, mit vorliegender Anordnung vermeidbar.

Bei der Low-IF-Frequenzsynthese im Empfänger schwingt der Empfangsoszillator 30 auf der Mittenfrequenz des Hochfrequenzsignals plus oder minus der Zwischenfrequenz. Das Hochfrequenz-Signal wird mit diesem Oszillatorsignal auf die Zwischenfrequenz heruntergemischt. Das sogenannte Spiegelband, das heißt, die Spiegelfrequenz, welche im Hochfrequenz-Bereich an der Stelle der Lokaloszillatorfrequenz plus oder minus Zwischenfrequenz vorhanden ist, würde mit dem Nutzbereich zusammenfallen, wenn sie nicht unterdrückt ist. So muß hier eine Spiegelunterdrückung vor der Hochfrequenz-Demodulation erfolgen, beispielsweise in diesem Fall im Oberflächenwellenfilter 9. Das nach der Mischung erhaltene Basisband-Signal besteht aus einer I- und einer Q-Komponente, wobei aber nur eine der beiden Komponenten weiterverarbeitet wird. Das Basisband-Signal ist somit ein rein reelles, kein komplexes Signal und das Spektrum ist symmetrisch um die OHz-Frequenzachse. Das nützliche Basisband-Signal hat die Bandbreite BW, sein Nutzbereich reicht von der um die halbe Bandbreite verminderten bis zur um die halbe Bandbreite erhöhten Zwischenfrequenz. Das Anti-Aliasing-Tiefpaß-Filter 22, 23 im Empfänger hat die Bandbreite BW/2. Diese Methode erfordert nur einen Analog/Digital-Wandler.

Umgekehrt, das heißt bei Low-IF-Senden liegt das Basisband-Signal als Bandpaß-Signal um die Zwischenfrequenz vor, wobei nur I- oder Q-Komponente zur Nutzsignalübertragung eingesetzt ist. Das nützliche Basisband-Signal hat dabei wiederum die Bandbreite BW im bereits beschriebenen Bereich. Der Sendeoszillator 30 oder 40, je nach Schalterstellung 8, schwingt auf einer Trägerfrequenz, welche gleich der Mittenfrequenz des gewünschten Hochfrequenzsignals, vermindert oder erhöht um die Zwischenfrequenz ist. Nach der Modulation erhält man das gewünschte Hochfrequenz-Signal im Frequenzband, welches von der um die halbe Bandbreite verminderten bis zur um die halbe Bandbreite erhöhten Mittenfrequenz des Hochfrequenz-Signals reicht. Falls der Modulator nichtideal ist, ist ein Oszillatorsignal mit der Oszillatorfrequenz vorhanden, welches aber in der Regel gegenüber dem Nutzsignal stark unterdrückt ist. Es entsteht aber aufgrund der Mischung ein Spiegelband, welches die gleiche Amplitude wie das Hochfrequenz-Nutzsignal hat, das, falls es störend wirkt, mittels Oberflächenwellenfilter 9 unterdrückt werden kann.

Bei der spiegelunterdrückenden Frequenzsynthese schließlich wird der Sende- beziehungsweise Empfangsoszillator 30, 40 ebenfalls auf einer Trägerfrequenz betrieben, welche der gewünschten beziehungsweise bestehenden Mittenfrequenz des Hochfrequenzsignals verringert oder erhöht um die Zwischenfrequenz des bandpaßbegrenzten Basisband-Signals entspricht.

Je nach Schalterstellung des Schalters 8 können eine oder beide Oszillator-Regelkreise 30, 40 in Betrieb sein.

Insgesamt sind bei der Lokaloszillatorfrequenz-Erzeugung folgende Fälle zu unterscheiden:

Falls im Sende- und Empfangszweig jeweils eine Direktumsetzung erfolgen soll, genügt der Betrieb der PLL 30.

Falls im Sende- und Empfangszweig ein Verfahren mit geringer Zwischenfrequenz, das heißt eine Low-IF-Frequenzsynthese oder eine spiegelunterdrückende Mischung gewünscht ist, genügt ebenfalls der Betrieb der PLL 30.

Falls im Sendezweig eine Direktumsetzung und im Empfangszweig ein Betrieb mit niedriger Zwischenfrequenz gewünscht ist, ist der Betrieb beider PLL 30, 40 mit verschiedener Lokaloszillatorfrequenz erforderlich.

Falls im Empfangszweig eine Direktumsetzung und im Sendezweig eine Frequenzsynthese mit Low-IF gewünscht ist, sind zwei verschiedene Oszillatoren mit unterschiedlicher Trägerfrequenz und daher der Betrieb beider PLL 30, 40 erforderlich.

Falls ein Abgleich von IQ-Impairments durchzuführen ist, sind beide PLL 30, 40 zur Bereitstellung zweier Lokaloszillatorsignale verschiedener Trägerfrequenz erforderlich.

Mit der Ansteuerschaltung 26 ist der Schalter 8, wie oben beschrieben, in Abhängigkeit von den gewünschten Frequenzsyntheseverfahren im Sender und im Empfänger einstellbar.

Wie bereits erläutert, ist mit der Steuerschaltung 26 die Grenzfrequenz der Tiefpaß-Filter 20 bis 23 so einstellbar, daß bei Wahl eines Direktumsetzungsverfahrens die kleinere der beiden Grenzfrequenzen und bei Auswahl eines Frequenzsyntheseverfahrens mit Low-IF die größere einstellbare Grenzfrequenz eingestellt ist. Dies gilt sowohl für Sende- als auch für Empfangszweig je nach einzustellender Frequenzsynthese-Betriebsart.

Vorliegender Transceiver bietet somit bei einfachem Aufbau eine große Flexibilität und universelle Einsetzbarkeit und ist insbesondere für Mehrträgerverfahren geeignet.

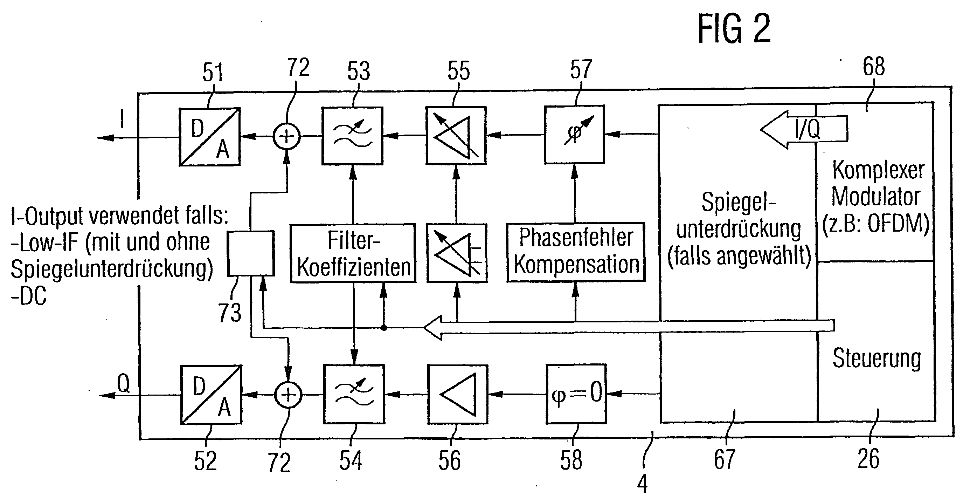

Figur 2 zeigt den sendeseitigen digitalen Signalprozessor 4, der mit I- und Q-Pfad aufgebaut ist, mit Digital/Analog-Wandlern 51, 52, welche den Tiefpaß-Filtern 20, 21 des Analogteils des Sendezweiges vorgeschaltet sind. Diesen Digital/Analog-Wandlern wiederum sind digitale Filter 53, 54 mit einstellbaren Filterkoeffizienten vorgeschaltet, welche von der Ansteuerschaltung 26 gesteuert sind. Den einstellbaren Filtern 53, 54, von denen je einer im I- beziehungsweise Q-Pfad vorgesehen ist, wiederum ist ein Phasenfehler-Kompensationsnetzwerk 55, 56, 57, 58 vorgeschaltet, wobei im Quadratur-Pfad Q ein Bauelement 58, welches keine Phasenkorrektur durchführt, sowie ein nachgeschalteter Verstärker 56 vorgesehen sind, im Inphase-Pfad I hingegen ist ein Bauelement zur Bildung einer einstellbaren Phasendrehung 57 mit nachgeschaltetem, einstellbarem Verstärker 55 zur Amplitudenkorrekur vorgesehen. Das Phasenfehler-Kompensationsnetzwerk 55 bis 58 ist ebenfalls von der Ansteuerschaltung 26 zu seiner Ansteuerung gekoppelt. Dem Phasenfehler-Kompensationsnetzwerk 55 bis 58 ist eine Schaltung zur Spiegelunterdrükkung 47 und dieser ein komplexer OFDM-Modulator 68 vorgeschaltet.

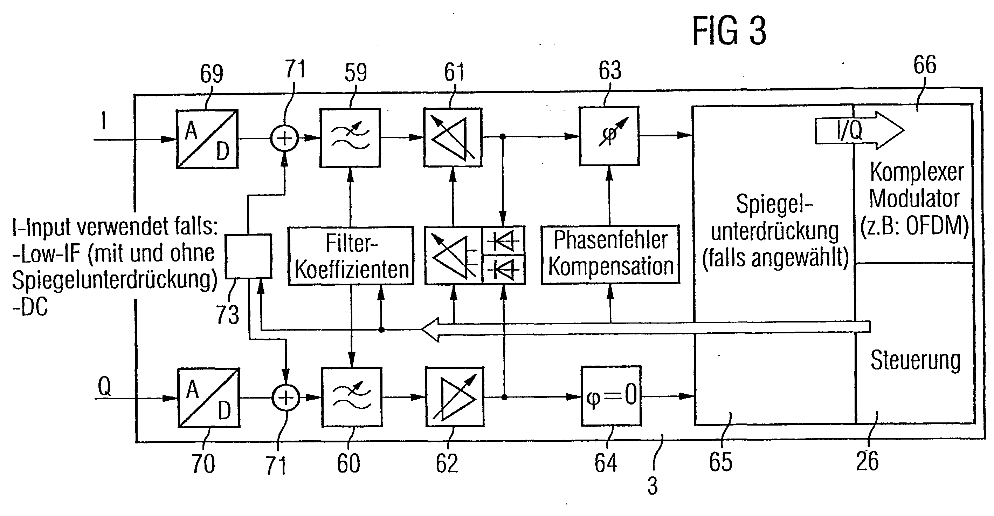

Die digitalen Signalverarbeitungseinrichtungen gemäß Figuren 2 und 3 stellen das analoge Basisband-Signal aus einem komplexen Modulator 68 bereit beziehungsweise führen das analoge Basisband-Signal einem komplexen Demodulator 66 zu. Weiterhin sind digitale Filter, IQ-Impairmentkorrektur, Spiegelunterdrückung sowie Modulation und Demodulation des Signals vorgesehen. Zudem sind jeweils DC(Direct Current)-Offset-Kompensationseinrichtungen 71, 72, 73 vorgesehen.

Figur 3 zeigt im einzelnen die empfängerseitige digitale Signalverarbeitungseinrichtung 3 mit je einem I- und Q-Pfad.

Dabei sind eingangsseitig Analog/Digital-Wandler 69, 70 vorgesehen, welche mit ihrem Eingang über I- und Q-Pfad an die Tiefpaß-Filter 22, 23 des Empfangszweigs angeschlossen sind. Diesen sind digitale Filter 59, 60 mit einstellbaren Filterkoeffizienten nachgeschaltet, welche mit der Ansteuerschaltung 26 verbunden sind. Diesen wiederum sind in I- und Q-Pfad jeweils einstellbare Verstärker 61, 62 zur Amplitudenkorrektur sowie eine Phasenfehlerkompensation 63, 64 zur Korrektur von Abweichungen vom idealen Phasenunterschied von 90° zwischen I- und Q-Pfad nachgeschaltet. Die Kompensationsbauelemente zum Abgleich von IQ-Impairments 61 bis 64 sind ebenfalls mit der Steuerschaltung 26 gekoppelt. Zur Kopplung kann ein Effektivwertdetektor vorgesehen sein, der in einer Rückkopplung in I- und Q-Pfad oder in einer Kreuzkopplung betrieben sein kann.

An die Phasenfehler-Kompensation 61 bis 64 schließt sich schaltungstechnisch eine Spiegelunterdrückungsschaltung 65 und daran ein komplexer Demodulator 66 an.

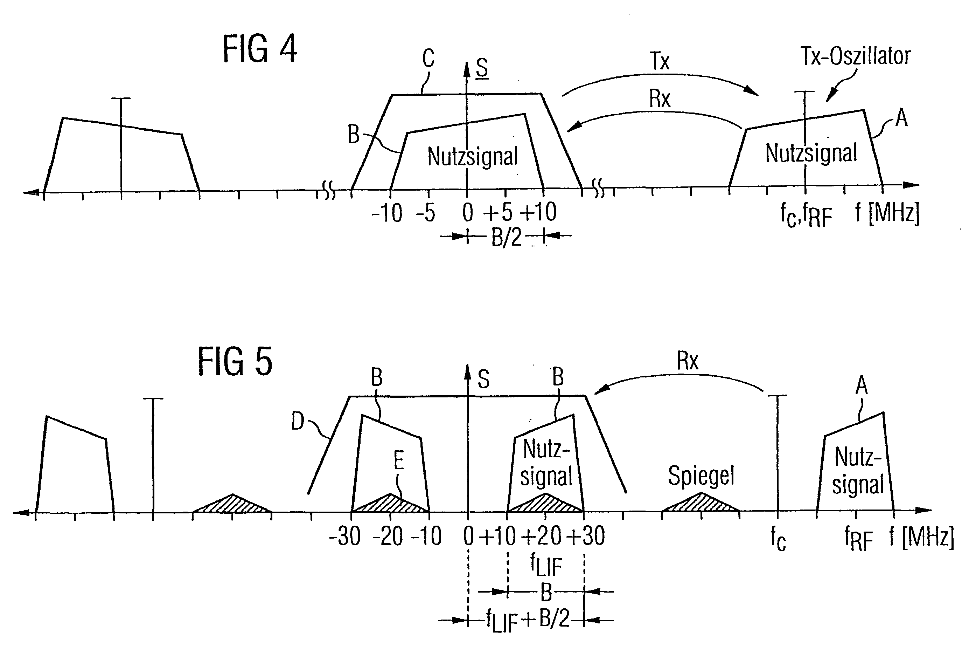

Figur 4 erläutert die sender- und empfängerseitige Direktumsetzung eines Nutzsignals mit der Mittenfrequenz f_{RF}, welches mit A bezeichnet ist, mittels einer Trägerfrequenz f_{C}, welche gleich der Mittenfrequenz f_{RF} ist. Hierdurch ergibt sich ein komplexes Basisband-Signal B, welches unsymmetrisch bezüglich der 0 Hertz-Achse sein kann. Empfängerseitige Tiefpaß-Filter 22, 23 haben eine geringe Grenzfrequenz eingestellt, so daß sich die Filtercharakteristik C ergibt. Nachbarkanäle fallen außerhalb dieses Nutzbereiches, der von -BW/2 bis +BW/2 reicht.

Figur 5 erläutert die mit der Schaltung von Figur 1 erfolgende Low-IF-Frequenzsynthese im Empfänger 1. Der Empfangsoszillator schwingt auf der Trägerfrequenz f_{C} = f_{RF} - F_{LIF}, mit f_{LIF} gleich Zwischenfrequenz. Das hochfrequente Nutzsignal A der Mittenfrequenz f_{RF} wird mit diesem Oszillatorsignal f_{C} heruntergemischt. Das sogenannte Spiegelband im Bereich an der Stelle f_{C} - f_{LIF} würde, wenn sie nicht unterdrückt wäre, mit dem Nutzbereich zusammenfallen. Das erhaltene Basisband-Signal B besteht aus einer I- und einer Q-Komponente, von denen aber nur eine Komponente weiterverarbeitet wird. Somit ist das Basisband-Signal B rein reell, sein Spektrum ist symmetrisch um die 0 Hertz-Achse. Die Tiefpaß-Filter 22, 23 haben eine höhere Grenzfrequenz und damit eine breitere Durchlaßcharakteristik D. Störsignale E führen zu dreieckförmigen Signalanteilen E im Nutzsignal A, B.

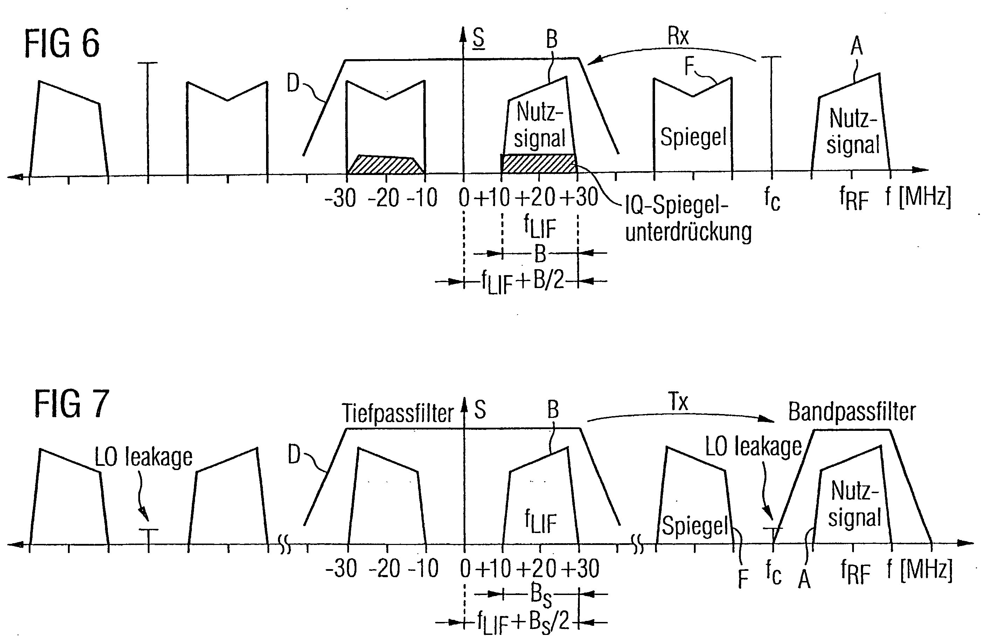

Figur 6 erläutert die mit der Anordnung von Figur 1 empfangsseitig mögliche Frequenzsynthese durch spiegelunterdrückende Mischung, bei der die Verhältnisse von Oszillatorfrequenz f_{C} und Nutzsignal A mit der Mittenfrequenz f_{RF} denen von Figur 5 entsprechen. Im Unterschied zu Figur 5 besteht bei Figur 6 jedoch das Basisband-Signal B als komplexes Basisband-Signal, von dem I- und Q-Komponente weiterverarbeitet werden. Weiterhin fällt bei der spiegelunterdrückenden Mischung das nützliche Basisband-Signal der Bandbreite BW mit dem Spiegelband zusammen. Demnach ist eine IQ-Spiegelunterdrückung erforderlich, vergleiche die hierzu vorgesehene Einrichtung 65 von Figur 3.

Figur 7 beschreibt die Verhältnisse bei Senden mit geringer Zwischenfrequenz, Low-IF, bei der das Basisband-Signal B als Bandpaß-Signal der Bandbreite BW vorliegt. Das hochfrequente Nutzsignal ist mit A bezeichnet. Durch Mischen mit einer Trägerfrequenz f_{C} entsteht das Nutzsignal A mit der Mittenfrequenz f_{RF}, mit einem Spiegelband F. Die Tiefpaß-Filter 20, 21 haben wiederum die hohe Grenzfrequenz und damit die Filtercharakteristik D eingestellt.

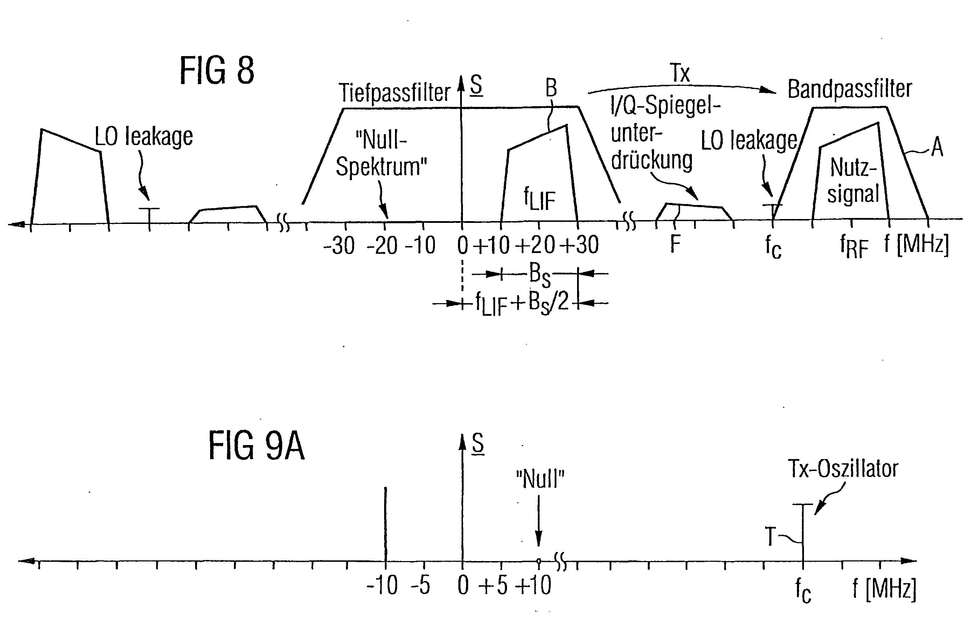

Figur 8 erläutert die Verhältnisse bei spiegelunterdrückender Mischung im Sendezweig, dabei liegt das Basisband-Signal B als Bandpaß-Signal in I- und Q-Komponente vor, ist komplex und muß demnach nicht symmetrisch sein. Das Nutzsignal der Bandbreite BW um die Zwischenfrequenz f_{LIF} ist mit B bezeichnet. Durch Mischen mit der Trägerfrequenz f_{c} erhält man das erwünschte Hochfrequenzsignal A um die Mittenfrequenz f_{RF} und mit der Bandbreite BW. In einem nicht idealen Modulator wird ein Lecksignal an der Trägerfrequenz f_{C} vorhanden sein, welches normalerweise gegenüber dem Nutzsignal stark unterdrückt ist. Andererseits entsteht aufgrund von IQ-Impairments ein Spiegelband im Frequenzband f_{RF} - 2 · f_{LIF} - BW/2 bis f_{RF} - 2 · f_{LIF} + BW/2. Das Spiegelband ist mit F bezeichnet. Die Unterdrükkung des Spiegelbandes gegenüber dem HF-Nutzsignal hängt von dem Ausmaß der IQ-Impairments ab. Die Qualität des nützlichen HF-Signals A selbst ist von den IQ-Impairments nicht betroffen.

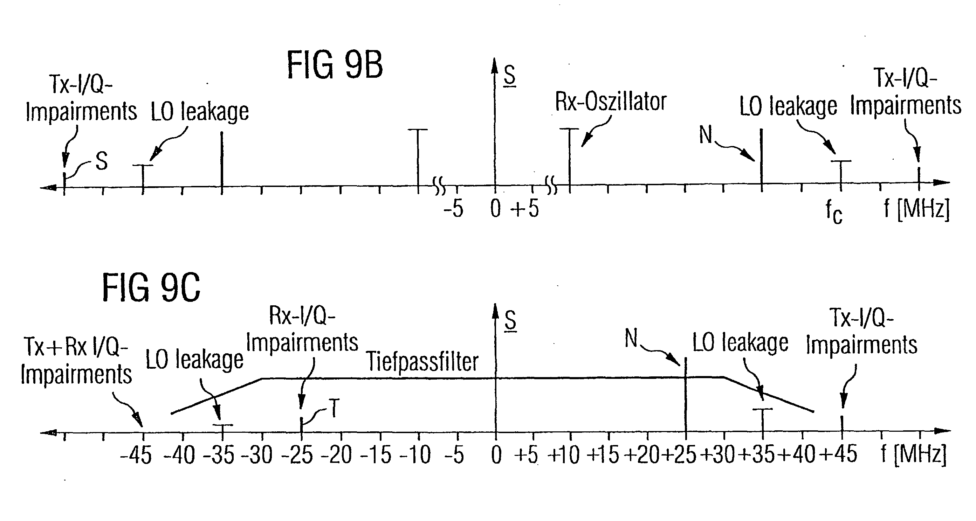

Figuren 9a bis 9c erläutern die Abschätzung der IQ-Impairments im Zeitbereich mittels eines komplexen, sinusförmigen Testsignals mit der Trägerfrequenz f_{C}. Das Testsignal ist mit T bezeichnet. Bedingt durch IQ-Impairments bildet sich im Sendepfad unsymmetrisch zum Nutzträger N ein Spiegelträger S, wie in Figur 9b gezeigt. Die Amplitude dieses Spiegelträgers S ist ein direktes Maß für die Phasen- und Amplitudenfehler im IQ-Modulator, das heißt im Modulator des Sendezweiges. Figur 9c zeigt die Verhältnisse im unmittelbar an den Sendezweig 2 zur IQ-Impairmentkorrektur über Schalter 5 angeschlossenen Empfangszweig 1, bei dem das Hochfrequenzsignal so IQ-demoduliert wird, daß nach analoger und digitaler Filterung ausschließlich der gesendete Nutzträger N erhalten wird. Wiederum erhält man einen Spiegelträger zum Nutzträger, welcher mit Bezugszeichen T versehen ist, und ein direktes Maß für Amplituden- und Phasenfehler im IQ-Demodulator, das heißt im Empfangszweig 1, ist. Mit Kenntnis der sende- und empfangsseitig getrennt voneinander ermittelten IQ-Impairments ist im Anschluß an die Abschätzung im Zeitbereich mit dem erfindungsgemäßen Transceiver eine Kompensation der Impairments möglich.

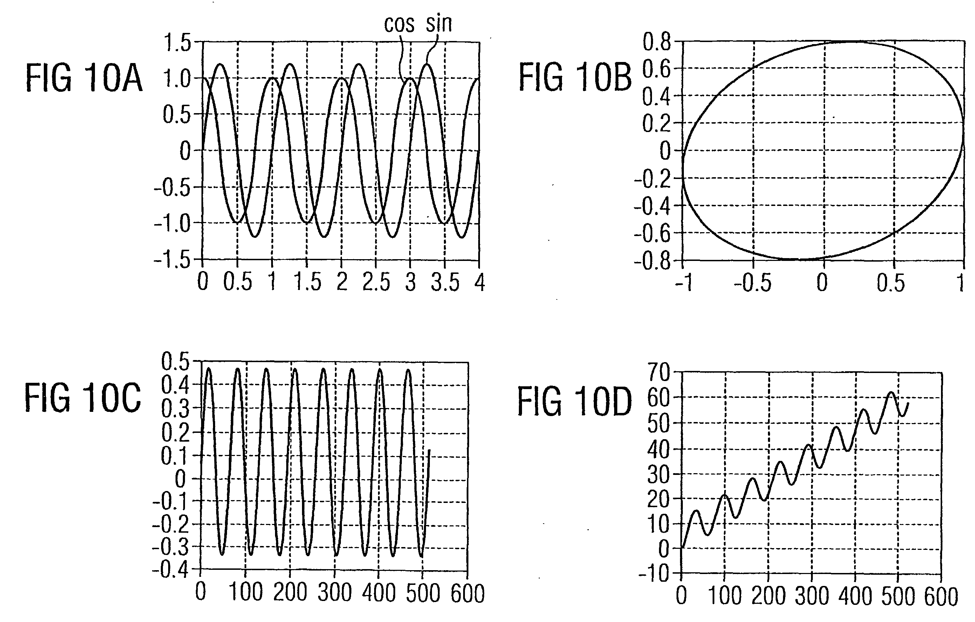

Figur 10a bis 10d erläutern in weiteren Schaubildern in komplexer Darstellung über der Frequenz die auftretenden IQ-Impairments anhand verschiedener Diagramme. Figur 10a zeigt eine normierte Cosinus-Schwingung cos sowie eine sowohl in Amplitude als auch Phase verfälschte Sinus-Schwingung sin, welche zum einen eine größere Amplitude als ihre Soll-Amplitude hat und welche zum anderen nicht ideal 90° phasenverschoben ist, aufgetragen über der Zeit. Figur 10b zeigt das komplexe Signal von Figur 10a, jedoch in einer komplexenen Ebene dargestellt. Die beschriebenen Amplituden- und Phasenabweichungen äußern sich in Figur 10b durch Abweichungen vom idealen Kreis, das verfälschte Signal hat in komplexer Darstellung eine Ellipsenform.

Figur 10c beschreibt das Ergebnis der Multiplikation von Realteil und Imaginärteil der komplexen Signale von Figur 10a und 10b, bei denen ein DC-Offset vorhanden ist, der vom Phasenfehler abhängt. Figur 10d schließlich zeigt das Signal gemäß Figur 10c integriert, und ist ein Maß für den Phasenfehler.

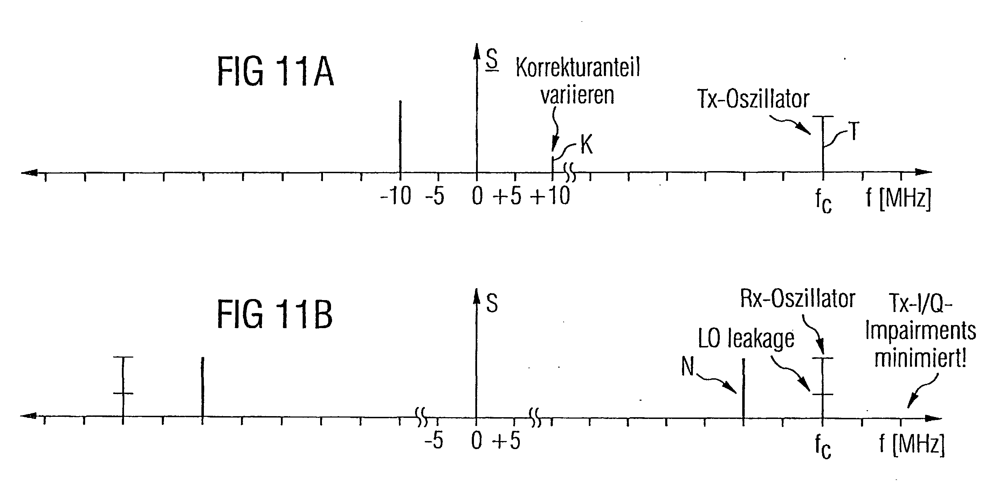

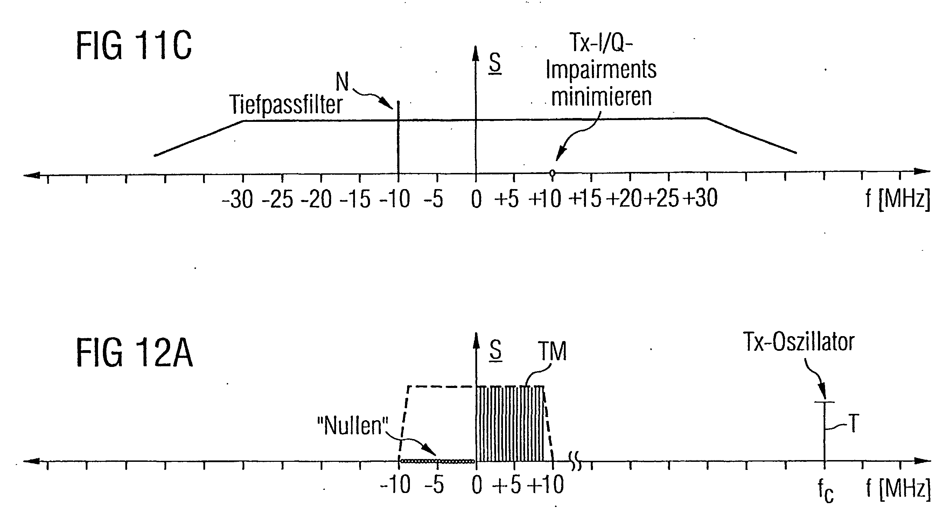

Nach dieser Abschätzung der IQ-Impairments getrennt nach Sender und Empfänger kann nun eine Korrektur zunächst der senderseitigen IQ-Impairments erfolgen. Dies ist in Figuren 11a und 11b erläutert, dort enthält das digitale Signal, welches eingangsseitig am Sendezweig zugeführt wird, einen Korrekturanteil K, derart mittels der Digitalen Signalverarbeitungseinrichtung 4 eingestellt, daß nach der IQ-Modulation im Sendezweig 2 der Spiegelanteil in Figur 11b gerade verschwindet. Nach der IQ-Demodulation im Empfangszweig wird wieder eine komplexe Schwingung erhalten, die eine Stellgröße für den Korrekturanteil K im Sender ist.

Alternativ kann die Frequenz des Nutzträgers auch variiert werden, um einen frequenzabhängigen Amplitudenfehler zu korrigieren. In diesem Fall erfolgt die IQ-Impairmentkorrektur mit Hilfe der digitalen Filter von Figuren 2 und 3, das heißt mittels der digitalen Signalverarbeitungseinrichtungen 3, 4. Diese Filter 53, 54, 59, 60 arbeiten dann als Frequenzgangentzerrer, sogenannte Equalizer, deren Koeffizienten so eingestellt sind, daß der Fehler in Abhängigkeit von der gewählten Frequenz verschwindet oder möglichst gering ist.

Figuren 12a bis 12c erläutern eine Möglichkeit der Abschätzung von IQ-Impairments und damit eine mögliche Korrektur dieser IQ-Impairments bei Mehrträger-Signalmodulierung, sogenannter OFDM-Modulation, Orthogonally Frequency Division Multiplexing. Dieses Verfahren findet bereits Anwendung im Rundfunksystem DAB, Digital Audio Broadcast, ebenso bei den Verfahren gemäß Hiperlan2 und IEEE 802.11b und gilt als vielversprechend für die Übertragung digitaler Fernsehsignale.

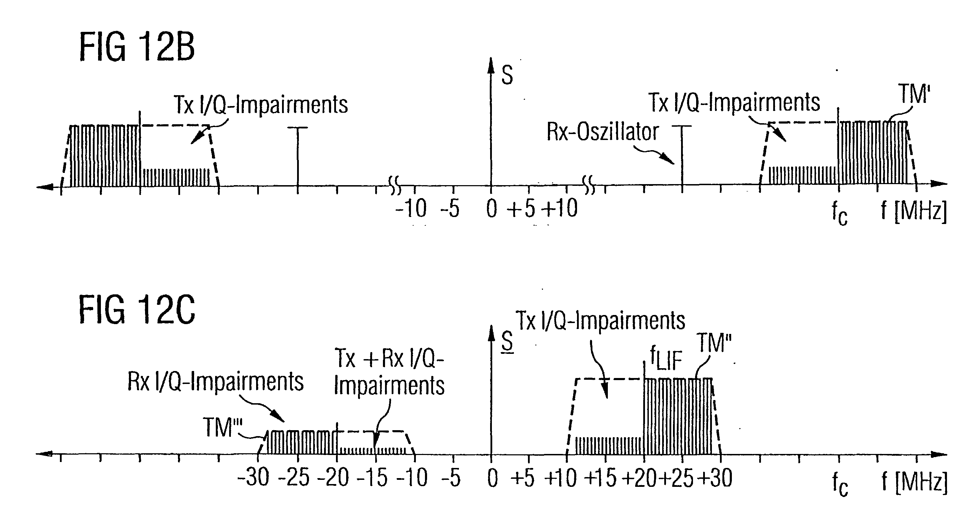

Figur 12a zeigt ein Mehrträger-Testsignal, dabei besteht ein Referenzsymbol aus insgesamt N-Trägern, von denen nur die "rechte" Hälfte, moduliert ist. Das linke Halbband ist mit Nullen moduliert. Nach der IQ-Modulation mit einem Oszillatorsignal T der Trägerfrequenz f_{C} entsteht ein Spektrum TM', wie in Figur 12b gezeigt, bei dem die jeweils der 0-Frequenz-Achse zugewandte Hälfte des Spektrums ein Maß für die vom Sender verursachten IQ-Impairments sind. Wird das Signal anschließend wieder demoduliert, mit einem Oszillatorsignal, welches der Differenz eines Trägers und einer Zwischenfrequenz f_{C} - f_{LIF} entspricht, so entsteht wiederum ein komplexes Basisband-Signal TM'', wie in Figur 12c gezeigt. Die IQ-Impairments im Empfangszweig verursachen nun unerwünschte Signalanteile TM''' spiegelsymmetrisch zu der 0-Hertz-Frequenzlinie, die ein Maß der empfangsseitigen IQ-Impairments sind. Somit ist auch hier eine getrennte Erfassung der Auswirkungen der Impairments von Sende- und Empfangszweig möglich, so daß auch eine getrennte Korrektur dieser Impairments im Sender und Empfänger ermöglicht ist. Jeder der Träger des Mehrträgersystems und der zugehörige unerwünschte Spiegelträger befinden sich bei verschiedenen Frequenzen. Somit ist es möglich, mit nur einem Mehrträger-Testsignal TM den frequenzabhängigen Fehler abzuschätzen. Die Korrektur erfolgt wie anhand Figuren 2 und 3 beschrieben.

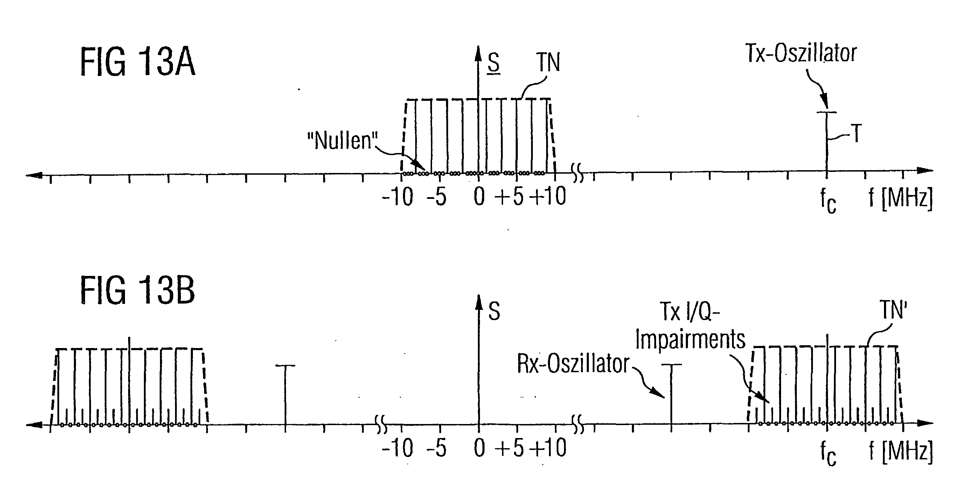

Ein weiteres Ausführungsbeispiel eines Referenzsymbols TN eines Mehrträger-OFDM-Verfahrens zur Verwendung als Testsignal zeigen Figur 13a bis 13c. Dabei wird lückenweise nur jeder zweite beziehungsweise jeder vierte Träger moduliert, die restlichen Träger werden mit Nullen moduliert. Durch die IQ-Modulation mit einem Oszillatorsignal T der Frequenz f_{C} ergibt sich ein Spektrum TN', welches in Figur 13b gezeigt ist. Die IQ-Impairments im Sendezweig 2 von Figur 1 verursachen, daß an der Stelle der modulierten Nullen unerwünschte Signalanteile entstehen, welche ein Maß für die sendeseitigen IQ-Impairment sind. Anschließend wird das Signal mit einem Oszillatorsignal f_{C} - f_{LIF} IQ-demoduliert, so daß ein komplexes Basisband-Signal TN'' entsteht, welches in Figur 13c gezeigt ist. Die IQ-Impairment im Empfangszweig 1 von Figur 1 verursachen unerwünschte Signalanteile TN''' spiegelsymmetrisch zur 0-Frequenzlinie, so daß die Auswirkung der IQ-Impairments im Sender und Empfänger getrennt voneinander erfaßbar und demnach im Empfänger einzeln korrigierbar ist. Die Korrektur im Empfänger erfolgt gemäß der digitalen Signalverarbeitungsschaltungen von Figuren 2 und 3. Mit dem Testsignal von Figur 13a können demnach die frequenzabhängigen Fehler in einfacher Weise abgeschätzt werden.

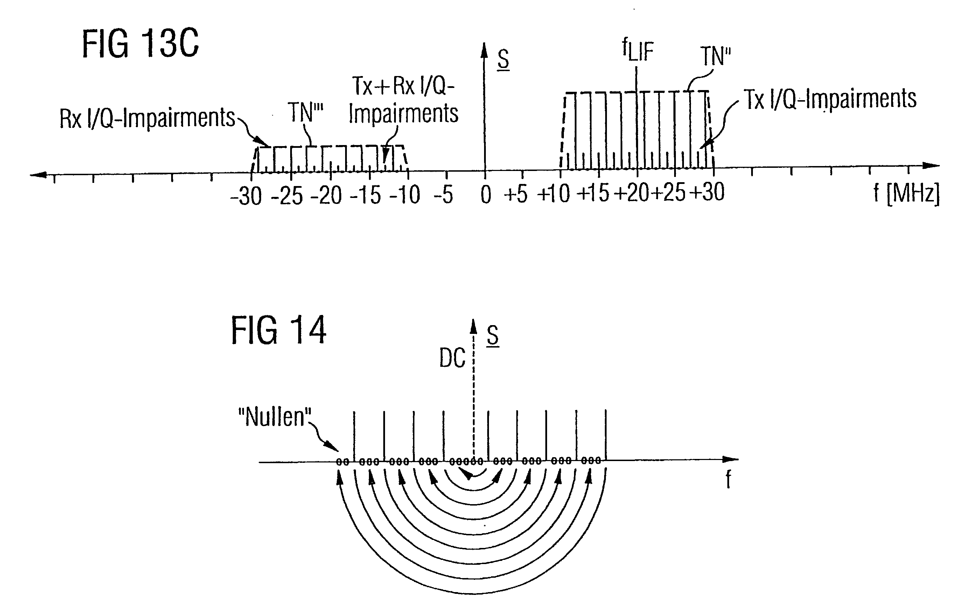

Figur 14 erläutert noch einmal die Modulation des Referenzsymbols mit N-Trägern bei einem Mehrträgermodulationsverfahren, bei denen lückenweise jeder vierte Träger moduliert wird, dazwischen werden Nullen auf die Trägerfrequenzen aufmoduliert, am Beispiels eines OFDM-Modulationsverfahrens.

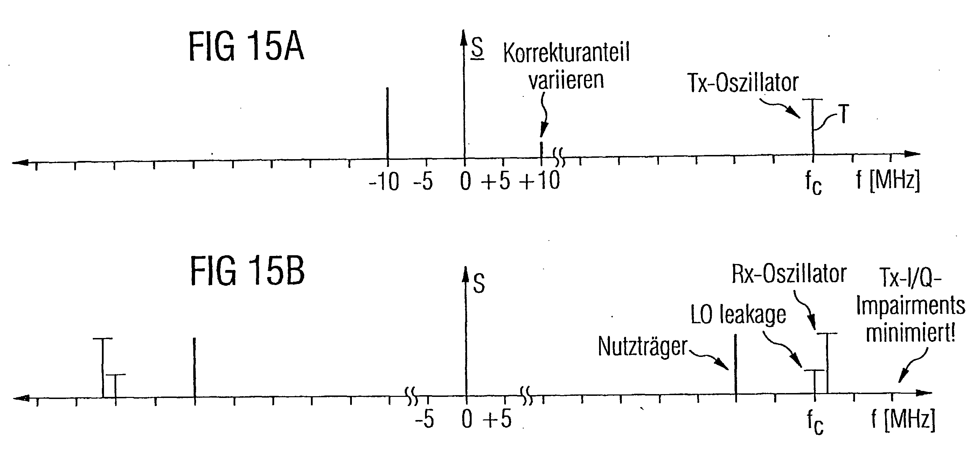

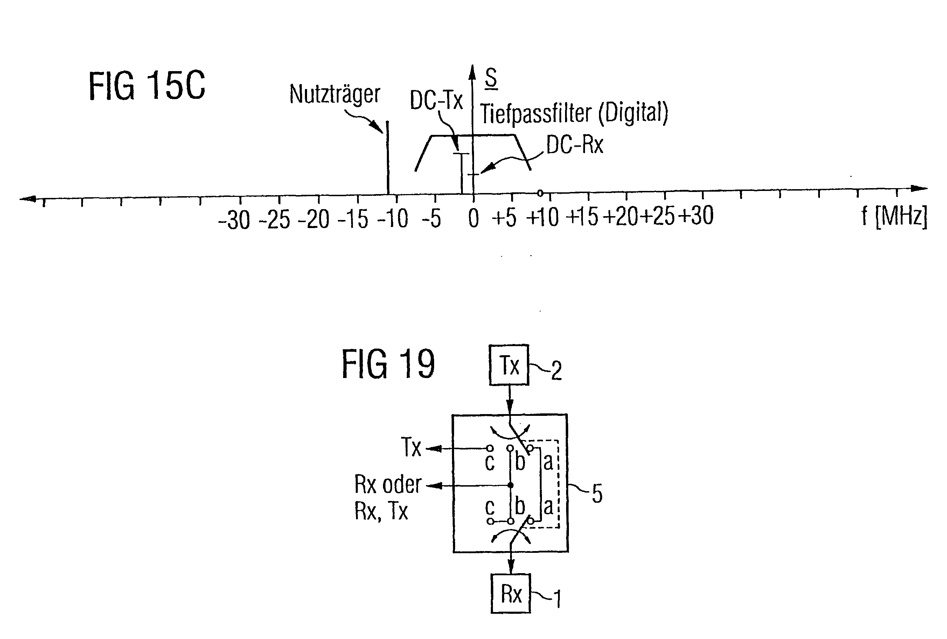

Figuren 15a bis 15c erläutern die mit dem erfindungsgemäßen Gegenstand mögliche Erfassung sende- und empfangsseitiger DC-Offsets und deren getrennt mögliche Korrigierbarkeit in Sender- und Empfängerzweig. Neben den bereits inklusive Korrekturmöglichkeiten beschriebenen I/Q-Amplitudenfehlern und I/Q-Phasenfehlern ist bei I/Q-Modulation und -Demodulation das Auftreten eines DC-Offsets unerwünscht. Ohne DC-Offset wird der Träger nach der (De-)Modulation vollständig unterdrückt. Ein DC-Offset hingegen bewirkt, daß der Träger nicht vollständig unterdrückt wird. Bei dem vorliegenden Gegenstand sind die DC-Offsets von Sende- und Empfangszweig unabhängig voneinander erfaßbar und kompensierbar. Hierfür wird, wie in den Figuren 15a bis 15c beschrieben, ein Testsignal erzeugt. Der Schalter 5 von Figur 1 wird so gestellt, daß der Sendezweig mit dem Empfangszweig verbunden ist. Im vorliegenden Beispiel wird von einer Direktumsetzung sende- und empfangsseitig ausgegangen, alle bereits beschriebenen anderen Kombinationen sind jedoch ebenso möglich.

Das Testsignal gemäß Figur 15a wird als harmonische Schwingung erzeugt und auf eine Trägerfrequenz hochgemischt. Das Trägersignal des Lokaloszillators wird dabei aufgrund von sendeseitigen Offsets nicht vollständig unterdrückt. Im Empfängerpfad wird der Empfangsoszillator mit einem Frequenzoffset bezüglich dem sendeseitigen Oszillator betrieben. Figur 15c zeigt das heruntergemischte Signal. Ein in der digitalen Signalverarbeitungseinrichtung vorgesehenes Tiefpaßfilter unterdrückt die Komponenten Nutzträger und Spiegelprodukte. Die DC-Offsetanteile des Empfangszweigs haben die Frequenz Null und können mit einem weiteren Tiefpaß von den DC-Offset-Anteilen des Sendezweigs getrennt werden. Letztere können mit einer Hochpaßfilterung gewonnen werden.

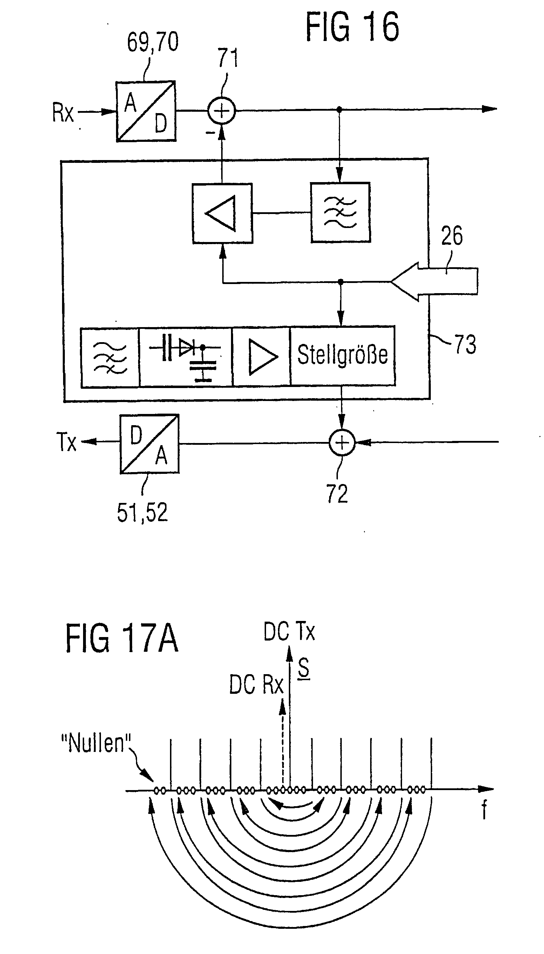

Figur 16 zeigt eine Schaltung zur Gewinnung einer Stellgröße aus den getrennt erfaßten DC-Offsets zu deren Korrektur. Dabei ist empfangs- und sendeseitig je ein Addierknoten 71, 72 auf der digitalen Seite der A/D- bzw. D/A-Wandler angeschlossen. Mit den Addierknoten 71, 72 ist ein DC-Offset-Detektor 73 verbunden, der mit der Steuerschaltung 26 gekoppelt ist und die beschriebenen, zur Stellgrößengewinnnung und - Korrektur erforderlichen Hoch- und Tiefpaßfilter aufweist.

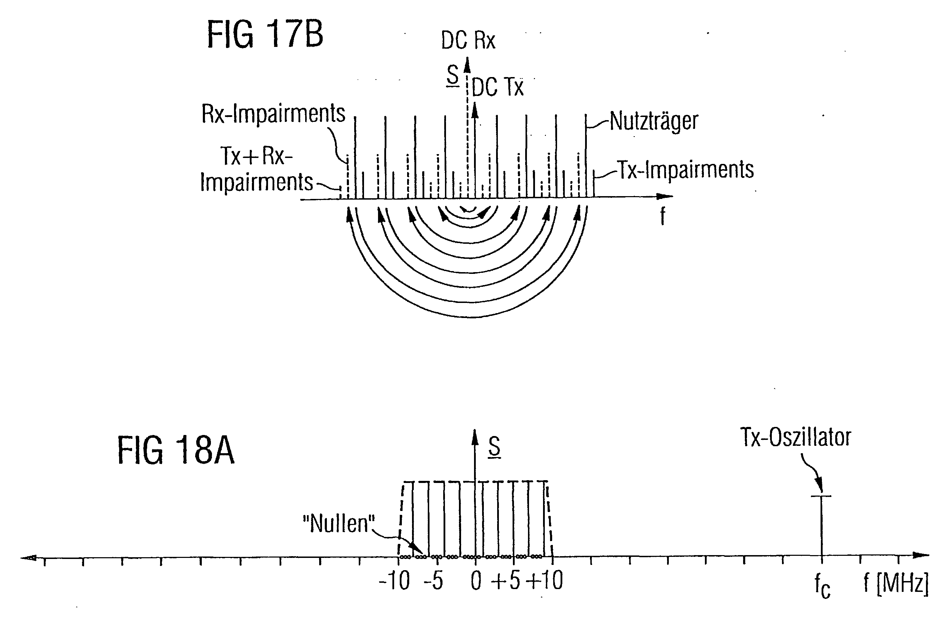

Figuren 17a und 17b zeigen spezielle OFDM-Testsignale zur DC-Offsetkorrektur für OFDM-Signale ebenfalls am Beispiel einer Direktumsetzung in Sende- und Empfangszweig. Dabei werden einige der Trägerfrequenzen im Mehrträgersignal gezielt nicht moduliert (Nullen). Die Anordnung der modulierten und nicht modulierten Träger wird so gewählt, daß die Spiegelträger, verursacht durch IQ-Impairments, des Sendezweigs eindeutig getrennt von den Spiegelträgern verursacht im Empfangszweig bleiben. Entsprechend verschachtelte Träger sind in den Figuren 17a, 17b gezeigt.

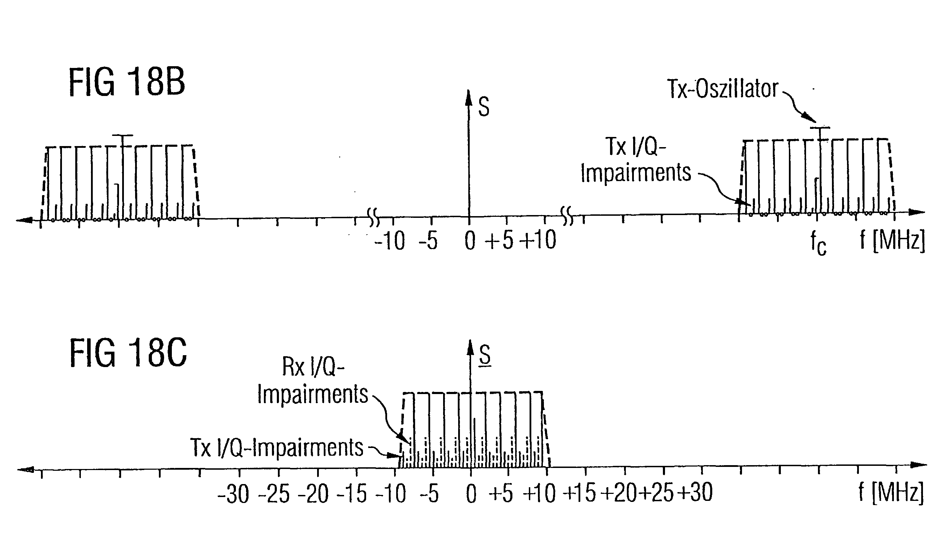

Figuren 18a bis 18c zeigen die Erfassung der Störgrößen eines I/Q-Modulators und I/Q-Demodulators für ein OFDM-Signal mit direkter Frequenzumsetzung in Sender und Empfänger. Im Sendezweig wird das OFDM-Testsignal, siehe Figur 18a, mit der Trägerfrequenz des Sende-Oszillators, siehe Figur 18a, hochgemischt in ein HF-Signal, siehe Figur 18b. Im Empfangszweig wird wiederum ein Frequenzabstand des Lokaloszillators zum sendeseitigen Oszillator gewählt, der beispielsweise einem Trägerabstand oder einem Vielfachen entspricht. Durch die geschickt gewählte Kombination der Träger und der Nullen überlappen sich die einzelnen Anteile, das heißt I/Q-Impairments im Sendezweig, I/Q-Impairments im Empfangszweig, DC-Offset im Sendezweig, DC-Offset im Empfangszweig) nicht, so daß im Empfänger eine eindeutige Auftrennung möglich ist. Die Störkomponenten können folglich zur Gewinnung entsprechender Stellgrößen getrennt von einander erfaßt und kompensiert werden.

Figur 19 schließlich zeigt ein Ausfürungsbeispiel des Schalters 5 von Figur 1. In Schalterstellung a sind Sende- und Empfangszweig unmittelbar miteinander verbunden. Schalterstellungen b und c sind für den Normalbetrieb vorgesehen, wobei in Schalterstellung b ein gemeinsamer Sende- und Empfangszweig 7 angesteuert ist und in Schalterstellung c eine vollständige Trennung von Senden und Empfangen 6, 7 sichergestellt ist.

### Bezugszeichenliste

- 1: Empfangszweig
- 2: Sendezweig
- 3: digitale Signalverarbeitung
- 4: digitale Signalverarbeitung
- 5: Schalter
- 6: Luftschnittstelle
- 7: Luftschnittstelle
- 8: Schalter
- 9: Oberflächenwellenfilter
- 11: Frequenzumsetzer
- 12: Frequenzumsetzer
- 13: Frequenzumsetzer
- 14: Frequenzumsetzer
- 15: Addierknoten
- 16: Phasenverschiebungsbaustein
- 17: Phasenverschiebungsbaustein
- 20: Tiefpaß
- 21: Tiefpaß
- 22: Tiefpaß
- 23: Tiefpaß
- 24: LNA
- 25: LNA
- 26: Ansteuerschaltung
- 30: Frequenzgenerator
- 31: VCO
- 32: Teiler
- 33: Phasendetektor
- 34: Teiler
- 35: Schleifenfilter
- 40: Frequenzgenerator
- 41: VCO
- 42: Teiler
- 43: Phasendetektor
- 44: Teiler
- 45: Schleifenfilter
- 50: Referenzoszillator
- 51: DAC
- 52: DAC
- 53: Tiefpaßfilter
- 54: Tiefpaßfilter
- 55: PA
- 56: PA
- 57: Phasenfehlerkompensation
- 58: Phasenfehlerkompensation
- 59: Tiefpaß
- 60: Tiefpaß
- 61: LNA
- 62: LNA
- 63: Phasenverschiebungsbaustein
- 64: Phasenverschiebungsbaustein
- 65: Spiegelunterdrückung
- 66: Mehrträger-Demodulator
- 67: Spiegelunterdrückung
- 68: Mehrträger-Modulator
- 69: ADC
- 70: ADC
- 71: Addierknoten
- 72: Addierknoten
- 73: DC-Offset-Detektor
- A: Nutzsignal
- B: Basisband-Signal
- BW: Bandbreite
- C: Filtercharakteristik
- D: Filtercharakteristik
- E: Fehlersignal
- F: Spiegelsignal
- K: Korrekturanteil
- N: Nutzträger
- TM: Mehrträger-Testsignal
- TN: Mehrträger-Testsignal
- f_{C}: Trägerfrequenz
- f_{RF}: Lokaloszillator-Frequenz
- f_{LIF}: Zwischenfrequenz

## Patentansprüche

1. Sende- und Empfangseinheit, aufweisend
- einen Empfangszweig (1) mit einer Inphase- (I) und einer Quadraturkomponente (Q) und mit einem ersten Frequenzumsetzer (11, 12),
- einen Sendezweig (2) mit einer Inphase- (I) und einer Quadraturkomponente (Q) und mit einem zweiten Frequenzumsetzer (13, 14),
**dadurch gekennzeichnet, dass**
- der erste Frequenzumsetzer (11, 12) mit einem ersten Frequenzgenerator (30) gekoppelt ist,
- der zweite Frequenzumsetzer (13, 14) über einen ersten Schalter (8) umschaltbar mit dem ersten oder einem zweiten Frequenzgenerator (30, 40) gekoppelt ist, und
- eine Steuereinrichtung (26) vorgesehen ist, die mit dem ersten Schalter (8) zum Auswählen einer Sende- und Empfangsbetriebsart gekoppelt ist.

2. Sende- und Empfangseinheit nach Anspruch 1,
**dadurch gekennzeichnet, daß**
zur Kopplung von Sende- und Empfangszweig (2, 1) ein zweiter Schalter (5) vorgesehen ist zum schalterstellungsabhängigen Durchschalten eines vom Sendezweig (2) bereitgestellten HF-Signals auf einen HF-Eingang des Empfangszweiges (1), wobei der zweite Schalter (5) zu seiner Ansteuerung mit der Steuereinrichtung (26) gekoppelt ist.

3. Sende- und Empfangseinheit nach Anspruch 2,
**dadurch gekennzeichnet, daß**
an Sende- und Empfangszweig (2, 1) hochfrequenzseitig je ein Bandpaß-Filter (9) angekoppelt ist.

4. Sende- und Empfangseinheit nach Anspruch 3,
**dadurch gekennzeichnet, daß**
die Bandpaß-Filter (9) Oberflächenwellenfilter sind.

5. Sende- und Empfangseinheit nach einem der Ansprüche 1 bis 4,
**dadurch gekennzeichnet, daß**
Sende- und Empfangszweig (2, 1) je zumindest ein Tiefpaß-Filter (20 bis 23) mit jeweils umschaltbarer Grenzfrequenz umfassen, welches zu einer Ansteuerung mit der Steuereinrichtung (26) verbunden ist.

6. Sende- und Empfangseinheit nach einem der Ansprüche 1 bis 5,
**dadurch gekennzeichnet, daß**
dem Sendezweig (2) vor- und dem Empfangszweig (1) nachgeschaltet eine digitale Signalverarbeitungseinrichtung (4, 3) vorgesehen ist, welche sende- und empfangsseitig je ein Tiefpaß-Filter (53, 54, 59, 60) mit umschaltbaren Filterkoeffizienten umfaßt.

7. Sende- und Empfangseinheit nach Anspruch 6,
**dadurch gekennzeichnet, daß**
die digitale Signalverarbeitungseinrichtung (3, 4) je ein Phasenfehler-Kompensationsnetzwerk (57, 58, 63, 64) umfaßt.

8. Sende- und Empfangseinheit nach Anspruch 7,
**dadurch gekennzeichnet, daß**
die Steuereinrichtung (26) mit den Phasenfehler-Kompensationsnetzwerken (57, 58, 63, 64) und den Tiefpaß-Filtern (53, 54, 59, 60) der digitalen Signalverarbeitungseinrichtung (3, 4) zu deren Ansteuerung verbunden ist.

9. Sende- und Empfangseinheit nach einem der Ansprüche 1 bis 8,
**dadurch gekennzeichnet, daß**
erster und zweiter Frequenzgenerator (30, 40) an eine gemeinsame Bezugsfrequenzquelle (50) angeschlossen sind.

10. Sende- und Empfangseinheit nach einem der Ansprüche 1 bis 9,
**dadurch gekennzeichnet, daß**
erster und zweiter Frequenzgenerator (30, 40) jeweils als Phasenregelschleife ausgeführt sind, mit durch Teilerverhältnisse unabhängig voneinander einstellbarer Lokaloszillator-Frequenz.

## Claims

1. Transmitting and receiving unit having
- a receiving branch (1) with an in-phase (I) component and a quadrature (Q) component and with a first frequency converter (11, 12),
- a transmitting branch (2) with an in-phase (I) component and a quadrature (Q) component and with a second frequency converter (13, 14),
**characterized in that**
- the first frequency converter (11, 12) is coupled to a first frequency generator (30),
- the second frequency converter (13, 14) is coupled switchably via a first switch (8) to the first or a second frequency generator (30, 40), and
- a control device (26) which is coupled to the first switch (8) for selecting a transmitting and receiving mode of operation is provided.

2. Transmitting and receiving unit according to Claim 1, **characterized in that**, for coupling transmitting and receiving branch (2, 1), a second switch (5) is provided for switching an RF signal provided by the transmitting branch (2) through to an RF input of the receiving branch (1) in dependence on the switch position, the second switch (5) being coupled to be driven by the control device (26).

3. Transmitting and receiving unit according to Claim 2, **characterized in that** a band-pass filter (9) is coupled in each case to the radio frequency end of the transmitting and receiving branch (2, 1).

4. Transmitting and receiving unit according to Claim 3, **characterized in that** the band-pass filters (9) are surface acoustic wave filters.

5. Transmitting and receiving unit according to one of Claims 1 to 4, **characterized in that** the transmitting and receiving branch (2, 1) in each case comprise at least one low-pass filter (20 to 23) having in each case a switchable cut-off frequency, which is connected to be driven by the control device (26).

6. Transmitting and receiving unit according to one of Claims 1 to 5, **characterized in that**, preceding the transmitting branch (2) and following the receiving branch (1), a digital signal processing device (4, 3) is provided and in each case comprises a low-pass filter (53, 54, 59, 60) with switchable filter coefficients at the transmitting and receiving end.

7. Transmitting and receiving unit according to Claim 6, **characterized in that** the digital signal processing device (3, 4) in each case comprises a phase error compensation network (57, 58, 63, 64).

8. Transmitting and receiving unit according to Claim 7, **characterized in that** the control device (26) is connected to the phase error compensation networks (57, 58, 63, 64) and the low-pass filters (53, 54, 59, 60) of the digital signal processing device (3, 4) in order to drive these.

9. Transmitting and receiving unit according to one of Claims 1 to 8, **characterized in that** the first and second frequency generators (30, 40) are connected to a common reference frequency source (50).

10. Transmitting and receiving unit according to one of Claims 1 to 9, **characterized in that** the first and second frequency generators (30, 40) are in each case phase-locked loops with a local oscillator frequency which can be set independently by divider ratios.

## Revendications

1. Unité d'émission et de réception, comportant
- une branche de réception (1) avec une composante en phase (I) et une composante en quadrature (Q) et avec un premier convertisseur de fréquence (11, 12),
- une branche d'émission (2) avec une composante en phase (I) et une composante en quadrature (Q) et avec un deuxième convertisseur de fréquence (13, 14),
**caractérisée par le fait que**
- le premier convertisseur de fréquence (11, 12) est relié à un premier générateur de fréquence (30),
- le deuxième convertisseur de fréquence (13, 14) est relié, commutable par l'intermédiaire d'un premier commutateur (8), au premier ou à un deuxième générateur de fréquence (30, 40), et
- il est prévu un dispositif de commande (26) qui est relié au premier commutateur (8) pour sélectionner un type de fonctionnement en émission et en réception.

2. Unité d'émission et de réception selon la revendication 1,
**caractérisée par le fait que**, pour la liaison de la branche d'émission respectivement de réception (2, 1), il est prévu un deuxième commutateur (5) pour connecter, en fonction de la position de commutateur, un signal HF fourni par la branche d'émission (2) sur une entrée HF de la branche de réception (1), le deuxième commutateur (5) étant relié pour sa commande au dispositif de commande (26).

3. Unité d'émission et de réception selon la revendication 2,
**caractérisée par le fait qu'**il est branché sur la branche d'émission respectivement de réception (2, 1), du côté des hautes fréquences, à chaque fois un filtre passe-bande (9).

4. Unité d'émission et de réception selon la revendication 3,
**caractérisée par le fait que** les filtres passe-bande (9) sont des filtres à ondes de surface.

5. Unité d'émission et de réception selon l'une des revendications 1 à 4,
**caractérisée par le fait que** les branches d'émission et de réception (2, 1) comprennent chacune au moins un filtre passe-bas (20 à 23) qui, à chaque fois, a une fréquence de coupure commutable et est relié pour sa commande au dispositif de commande (26).

6. Unité d'émission et de réception selon l'une des revendications 1 à 5,
**caractérisée par le fait qu'**il est prévu du côté amont de la branche d'émission (2) et du côté aval de la branche de réception (1) un dispositif de traitement de signal numérique (4, 3) qui comprend côté émission et côté réception à chaque fois un filtre passe-bas (53, 54, 59, 60) avec coefficients de filtrage commutables.

7. Unité d'émission et de réception selon la revendication 6,
**caractérisée par le fait que** le dispositif de traitement de signal numérique (3, 4) comprend à chaque fois un réseau de compensation d'erreur de phase (57, 58, 63, 64).

8. Unité d'émission et de réception selon la revendication 7,
**caractérisée par le fait que** le dispositif de commande (26) est relié pour leur commande aux réseaux de compensation d'erreur de phase (57, 58, 63, 64) et aux filtres passe-bas (53, 54, 59, 60) du dispositif de traitement de signal numérique (3, 4).

9. Unité d'émission et de réception selon l'une des revendications 1 à 8,
**caractérisée par le fait que** le premier et le deuxième générateur de fréquence (30, 40) sont raccordés à une source de fréquence de référence (50) commune.

10. Unité d'émission et de réception selon l'une des revendications 1 à 9,
**caractérisée par le fait que** le premier et le deuxième générateur de fréquence (30, 40) sont réalisés comme des boucles à verrouillage de phase avec fréquences d'oscillateur local réglables indépendamment l'une de l'autre par des rapports de division.
